# EUROPEAN PATENT SPECIFICATION

(11) **EP 3 672 155 B1**
(45) Date of publication and mention of the grant of the patent: **01.05.2024**
(21) Application number: 18846605.6
(22) Date of filing: 14.03.2018
(51) Int. Cl.: H04Q 11/00, H04L 41/14, H04L 41/142, H04L 41/5054, H04L 41/122, H04J 14/02, H04L 41/16

(54) **METHOD, DEVICE AND SYSTEM FOR OPTIMIZING SDON ARCHITECTURE MODEL, AND COMPUTER READABLE STORAGE MEDIUM**
VERFAHREN, VORRICHTUNG UND SYSTEM ZUR OPTIMIERUNG EINES SDON-ARCHITEKTURMODELLS UND COMPUTERLESBARES SPEICHERMEDIUM
PROCÉDÉ, DISPOSITIF, ET SYSTÈME PERMETTANT D'OPTIMISER UN MODÈLE D'ARCHITECTURE SDON, ET SUPPORT D'ENREGISTREMENT LISIBLE PAR ORDINATEUR

(30) Priority: 18.08.2017 CN 201710710577
(43) Date of publication of application: 24.06.2020
(73) Proprietor: ZTE Corporation, Shenzhen, Guangdong 518057 (CN)
(72) Inventor: WANG, Dajiang, Shenzhen Guangdong 518057 (CN); WANG, Zhenyu, Shenzhen Guangdong 518057 (CN)
(74) Representative: Blumbach · Zinngrebe Patentanwälte PartG mbB
(86) International application number: PCT/CN2018/079014
(87) International publication number: WO 2019/033749

(56) References cited:
- CN-A- 104 734 954
- US-A1- 2016 078 342
- TRONCO TANIA REGINA ET AL: "Cognitive algorithm using fuzzy reasoning for software-defined optical network", PHOTONIC NETWORK COMMUNICATIONS, KLUWER ACADEMIC PUBLISHERS, DORDRECHT, NL, vol. 32, no. 2, 16 April 2016 (2016-04-16) , pages 281-292, XP036071346, ISSN: 1387-974X, DOI: 10.1007/S11107-016-0628-1 [retrieved on 2016-04-16]
- THYAGATURU AKHILESH S ET AL: "Software Defined Optical Networks (SDONs): A Comprehensive Survey", IEEE COMMUNICATIONS SURVEYS & TUTORIALS, vol. 18, no. 4, 18 November 2016 (2016-11-18), pages 2738-2786, XP011634946, DOI: 10.1109/COMST.2016.2586999 [retrieved on 2016-11-18]
- OU QINGHAI ET AL: "Cross-layer collaborative interconnecting for multi-domain software defined optical network", 2017 INTERNATIONAL CONFERENCE ON COMPUTER, INFORMATION AND TELECOMMUNICATION SYSTEMS (CITS), IEEE, 21 July 2017 (2017-07-21), pages 157-160, XP033153092, DOI: 10.1109/CITS.2017.8035316 [retrieved on 2017-09-12]
- TAIMUR BAKHSHI: "State of the Art and Recent Research Advances in Software Defined Networking", WIRELESS COMMUNICATIONS AND MOBILE COMPUTING, vol. 2017, 1 January 2017 (2017-01-01), pages 1-35, XP055652898, ISSN: 1530-8669, DOI: 10.1155/2017/7191647
- Anonymous: "SDON", SDNLAB , 29 December 2016 (2016-12-29), XP055656650, Retrieved from the Internet: URL:https://www.sdnlab.com/18315.html
- Huang et al: "RESEARCH ON THE STRUCTURE OF COGNITIVE OPTICAL NETWORK BASED ON ARTIFICIAL INTELLIGENCE TECHNLOGY", OPTICAL COMMUNICATION TECHNOLOGY,

## Description

### Field

The disclosure relates to, but is not limited to, the field of communication technologies, and particularly to a method, device and system for optimizing the SDON controller architecture model and a computer-readable storage medium.

### Background

In recent years, with the continuous emergence of large data, high definition video, mobile Internet and other application services, the rapid growth of the demand for network bandwidth is promoted. Especially for the advent of the 5G era, compared with the 4G era, the industry generally believes that the bandwidth demand of the 5G will increase from 100 to 1000 times, so the optical transmission network technology having the bearing function has received more and more attentions in the industry in a variety of networking applications. At the same time, with the development of the optical transmission network technology itself (such as over 100G technology, etc.), the optical transmission network becomes more flexible and elastic, and the types of the optical network resources that can be defined programmatically are more abundant (such as the information model of the flexible optoelectronic hybrid scheduling node, the light spectrum efficiency, the number of the photonic carriers, the center frequency, the grid width, etc.). In this context, the dynamic allocation and flexible scheduling of the programmable optical network resources are implemented by the Software Defined Network (SDN) management and control architecture system (i.e., Software Defined Optical Network (SDON) architecture) supporting the optical transmission network technology, which has become the focus of the industry in the optical network management and control field.

Based on the appearance of the SDON architecture system, it gives the better programmability to the optical network resources. The SDON is at the application layer of the optical transmission network, and opens up the programming capability of the network resources to the user (which may be the network operator, network service provider or third-party vendor in the application field). The user may select a certain optimization strategy according to the user's own needs and take out the required resources as needed, to thereby implement the flexible deployment and scheduling of the optical network resources.

The industry generally employs the mode in which the user is supported to define the corresponding algorithm optimization strategy and the corresponding mathematical model at the SDON application layer and the heuristic algorithm (such as Mixed Integer Linear Programming (MILP) algorithm or the like) engine is constructed inside the SDON controller layer, so as to realize the dynamic allocation and concurrent optimization of the optical network resources required by the user. Therefore, the heuristic algorithm is now considered by the industry as the better solution for the global concurrent optimization of the SDON optical network resources, and includes MILP algorithm, greedy algorithm, genetic algorithm and others, all of which belong to the heuristic algorithm category. In view of the better operability and practicability of the MILP algorithm, the industry performs more researches in particular on the application of the MILP algorithm. In the MILP algorithm design, usually in accordance with the solution of the heuristic algorithm, the mathematical model meeting the certain optimization strategy of global resources is constructed according to the use experience of the optical network, which roughly includes the construction of the objective functions and the constraint conditions, and the output of the calculation result of the resource optimization is completed through the iterative process of the algorithm itself. At present, at the international level, for example the International Business Machines Corporation (IBM) developed the ILOG CPLEX algorithm software based on the principle of Linear Programming (LP) algorithm, and achieved the more ideal application effect. Non-patent document "TRONCO TANIA REGINA ET AL: "Cognitive algorithm using fuzzy reasoning for software-defined optical network" PHOTONIC NETWORK COMMUNICATIONS, KLUWER ACADEMIC PUBLISHERS, DORDRECHT, NL, vol. 32, no. 2, 16 April 2016" proposes a cognitive algorithm based on Fuzzy C-Means (FCM) technique for the learning and decision-making functionalities of software-defined optical networks (SDONs).

### Summary

The following is the overview of the subjects described in details herein. The overview is not intended to limit the protection scope of the claims.

In consideration of the characteristics of the optical network resources, the heuristic algorithm has some following shortcomings in the global concurrent optimization application of the optical network.
1) The relatively complete and standardized theoretical system for the mathematical model design of the optical network resource optimization has not yet been established in the industry, and the optimal solution strategy and the mathematical model design are obtained only based on the experiences.
2) Due to the Non-deterministic Polynomial (NP) theoretical problem faced by the LP, the case in which the solution meets the local optimum but not the global optimum may occur; and the judgment basis of the occurrence of the local optimum further needs to be determined by the algorithm model designer.
3) The condition parameters in mathematical model play an important role in the algorithm effect, and how to set the parameters effectively is an important issue.
4) The convergence issue of the heuristic algorithm is also common, including: how to solve the uncertainty of the convergence speed, how to achieve the fastest algorithm convergence speed, how to determine the iteration stop conditions and processing measures in the non-convergence case, and so on.

The disclosure provides a method, device and system for optimizing the SDON controller architecture model and a computer-readable storage medium, so that the artificial intelligence features are added on the basis of the general SDON controller architecture system, and the dynamic optimization and correction of global concurrent optimization algorithm model of the SDON controller are realized through the artificial intelligence processing procedure such as cognition and learning. The features of the method, device and system for optimizing the SDON controller architecture model and a computer-readable storage medium according to the present invention are defined in the independent claims, and the preferable features according to the present invention are defined in the dependent claims.

An embodiment of the disclosure provides a method for optimizing a SDON controller architecture model, which includes: receiving an application service request including a resource object to be optimized and resource optimization strategic intent; acquiring network-wide-programmable virtual network resource information according to the application service request, and generating an optimization algorithm mathematical model and an algorithm execution strategy; performing a calculation according to the optimization algorithm mathematical model, the algorithm execution strategy and the network-wide-programmable virtual network resource information to obtain a first optimized calculation result; and invoking case information in a database, and optimizing the SDON controller architecture model according to the case information and the first optimized calculation result.

The optimizing the SDON controller architecture model according to the case information and the first optimized calculation result includes: judging whether there is matching case information matching with the optimization algorithm mathematical model and the algorithm execution strategy in the database; judging whether a second optimized calculation result in the matching case information is superior to the first optimized calculation result when there is the matching case information matching with the optimization algorithm mathematical model and the algorithm execution strategy in the database; correcting the SDON controller architecture model according to the matching case information when the second optimized calculation result in the matching case information is superior to the first optimized calculation result; optimizing the SDON controller architecture model according to the first optimized calculation result when the first optimized calculation result is superior to the second optimized calculation result in the matching case information.

The correcting the SDON controller architecture model according to the matching case information includes: providing a correcting suggestion or adjusting suggestion for the optimization algorithm mathematical model and the algorithm execution strategy according to the matching case information.

In an exemplary embodiment, after judging whether there is matching case information matching with the optimization algorithm mathematical model and the algorithm execution strategy in the database, the method further includes: recording the resource object to be optimized, the optimization algorithm mathematical model, the algorithm execution strategy and the first optimized calculation result as new case information in the database when there is no matching case information matching with the optimization algorithm mathematical model and the algorithm execution strategy in the database; and after judging whether a second optimized calculation result in the matching case information is superior to the first optimized calculation result, the method further includes: recording the resource object to be optimized, the optimization algorithm mathematical model, the algorithm execution strategy and the first optimized calculation result as new case information in the database when the first optimized calculation result is superior to the second optimized calculation result in the matching case information.

In an exemplary embodiment, after recording the resource object to be optimized, the optimization algorithm mathematical model, the algorithm execution strategy and the first optimized calculation result as new case information in the database, the method further includes: allocating programmable network resources to the resource object to be optimized according to the first optimized calculation result, and updating the network-wide-programmable virtual network resource information according to the allocated programmable network resources.

An embodiment of the disclosure provides a device for optimizing a SDON controller architecture model, which includes: a receiving module configured to receive an application service request including a resource object to be optimized and resource optimization strategic intent; an acquiring module configured to acquire network-wide-programmable virtual network resource information according to the application service request, and generate an optimization algorithm mathematical model and an algorithm execution strategy; a calculation module configured to perform a calculation according to the optimization algorithm mathematical model, the algorithm execution strategy and the network-wide-programmable virtual network resource information to obtain a first optimized calculation result; and an optimizing module configured to invoke case information in a database, and optimize the SDON controller architecture model according to the case information and the first optimized calculation result.

The optimizing module includes: a first judging unit configured to judge whether there is matching case information matching with the optimization algorithm mathematical model and the algorithm execution strategy in the database; a second judging unit configured to judge whether a second optimized calculation result in the matching case information is superior to the first optimized calculation result when there is the matching case information matching with the optimization algorithm mathematical model and the algorithm execution strategy in the database; a correcting unit configured to correct the SDON controller architecture model according to the matching case information when the second optimized calculation result in the matching case information is superior to the first optimized calculation result; and an optimizing unit configured to optimize the SDON controller architecture model according to the first optimized calculation result when the first optimized calculation result is superior to the second optimized calculation result in the matching case information.

The correcting unit is configured to: provide a correcting suggestion or adjusting suggestion for the optimization algorithm mathematical model and the algorithm execution strategy according to the matching case information.

In an exemplary embodiment, the optimizing module further includes: an updating unit configured to record the resource object to be optimized, the optimization algorithm mathematical model, the algorithm execution strategy and the first optimized calculation result as new case information in the database when there is no matching case information matching with the optimization algorithm mathematical model and the algorithm execution strategy in the database or when the first optimized calculation result is superior to the second optimized calculation result in the matching case information.

In an exemplary embodiment, the optimizing module further includes: a resource allocation unit configured to allocate programmable network resources to the resource object to be optimized according to the first optimized calculation result, and update the network-wide-programmable virtual network resource information according to the allocated programmable network resources.

An embodiment of the disclosure further provides a system for optimizing a SDON controller architecture model, which includes a memory, a processor and at least one application stored in the memory and configured to be executed by the processor, where the at least one application is configured to perform the method for optimizing the SDON controller architecture model described above.

An embodiment of the disclosure further provides a computer-readable storage medium storing a computer program thereon, where the program, when executed by a processor, implements the method for optimizing the SDON controller architecture model described above.

The embodiments of the disclosure provide the method, device and system for optimizing the SDON controller architecture model and the computer-readable storage medium, according to the appended independent claims.

The artificial intelligence features are added on the basis of the general SDON controller architecture system, and the dynamic optimization and correction of global concurrent optimization algorithm model of the SDON controller are realized through the artificial intelligence processing procedure such as cognition and learning.

Other aspects can be understood after reading and understanding the attached drawings and detailed description.

### Brief Description of the Drawings

Fig. 1 is a flow chart of a method for optimizing a SDON architecture model provided by a first embodiment of the disclosure.
Fig. 2 is a schematic diagram of the SDON controller architecture system provided by the first embodiment of the disclosure.
Fig. 3 is a schematic diagram of the application module sub-layer provided by the first embodiment of the disclosure.
Fig. 4 is a method flow chart of the step S40 in Fig. 1.
Fig. 5 is an exemplary structural block diagram of a device for optimizing a SDON architecture model provided by a second embodiment of the disclosure.
Fig. 6 is an exemplary structural block diagram of an optimizing module provided by the second embodiment of the disclosure.
Fig. 7 is an exemplary structural block diagram of another optimizing module provided by the second embodiment of the disclosure.

### Detailed Description of the Embodiments

The embodiments of the disclosure will be described below in combination with the drawings.

It should be noted that the terms such as "first", "second" and the like herein are used to distinguish the similar objects, but not necessarily to describe a particular order or sequence.

### First embodiment

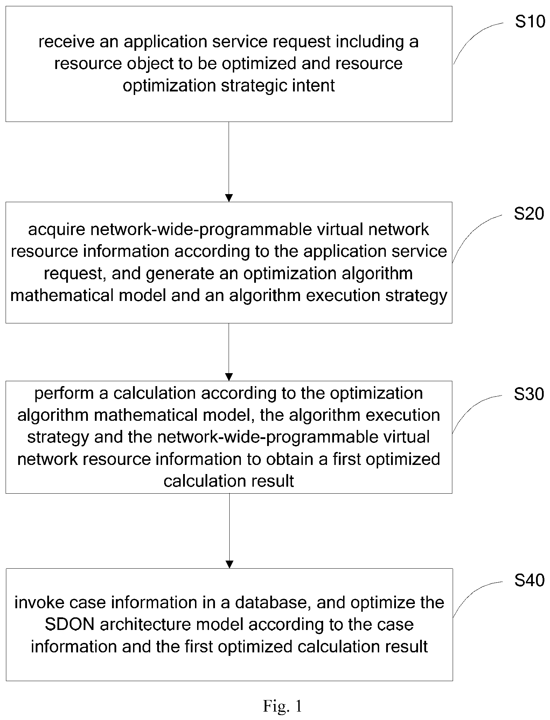

As shown in Fig. 1, in this embodiment, a method for optimizing a SDON architecture model includes the following steps S10 to S40.

In step S10, an application service request including a resource object to be optimized and resource optimization strategic intent is received.

In step S20, network-wide-programmable virtual network resource information according to the application service request is acquired, and an optimization algorithm mathematical model and an algorithm execution strategy are generated.

In step S30, a calculation is performed according to the optimization algorithm mathematical model, the algorithm execution strategy and the network-wide-programmable virtual network resource information to obtain a first optimized calculation result.

In step S40, case information in a database is invoked, and the SDON architecture model is optimized according to the case information and the first optimized calculation result.

In this embodiment, the artificial intelligence features are added on the basis of the general SDON controller architecture system, and the dynamic optimization and correction of global concurrent optimization algorithm model of the SDON controller are realized through the artificial intelligence processing procedure such as cognition and learning.

Here, the algorithm execution strategy may include the algorithm optimization strategy and the network model to be optimized.

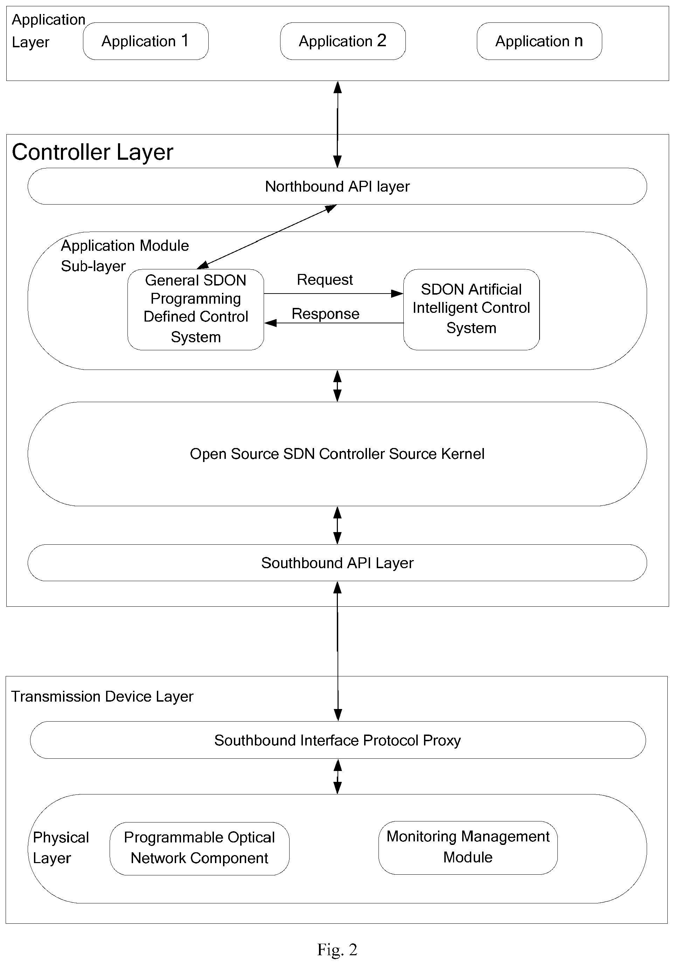

As shown in Fig. 2, in this embodiment, the SDON controller architecture system may include: an application layer, a controller layer and a transmission device layer, where the application layer may include several application services; the controller layer includes a northbound Application Programming Interface (API) layer, an application module sub-layer, an open source SDN controller source kernel and a southbound API layer; and the transmission device layer may include a southbound interface protocol proxy and a physical layer.

The northbound API layer may be configured to implement the interaction with the application layer, acquire the application service request required by the user, and reply with a service implementation result.

The application module sub-layer may be configured to implement application service functions of the artificial intelligence features, and ordinary services, and is the core functional sub-layer of the SDON controller layer.

The open source SDN controller source kernel may be configured to provide the controller with a platform support function as a software operating system.

The southbound API layer may be configured to implement the interaction with the transmission device layer, issue an application service configuration request, and acquire a service configuration processing result.

The southbound interface protocol proxy may be configured to implement the interaction with the controller layer, acquire the application service configuration request message, parse the request message and forward the parsed request message to the physical layer for processing.

The physical layer may roughly include a programmable optical network component and a monitoring management module, e.g., may be composed of them, and the physical layer may be configured to perform operations such as configuration and monitoring on the programmable optical network component according to contents of the parsed message transmitted by the southbound interface protocol proxy.

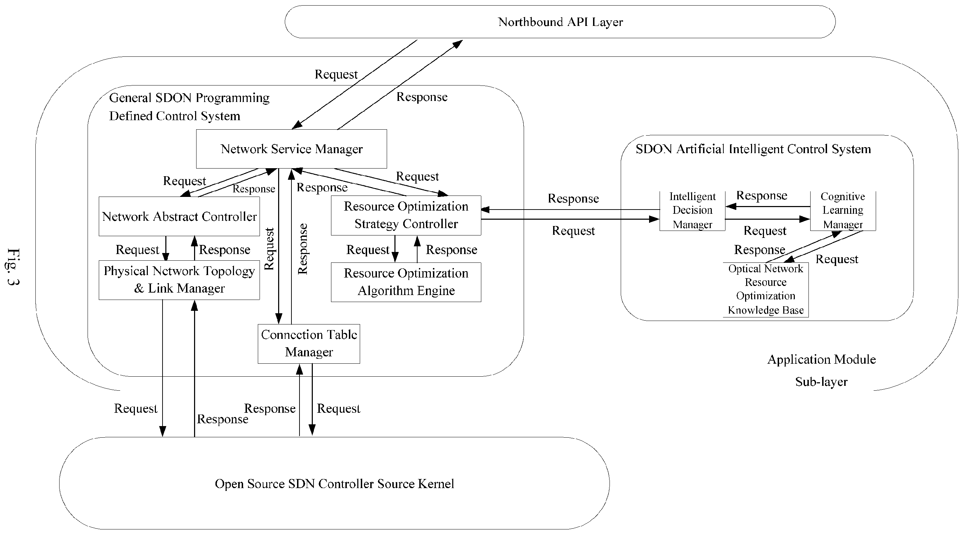

As shown in Fig. 3, in this embodiment, the application module sub-layer may include the general SDON programming defined control system and the SDON artificial intelligent control system, where the general SDON programming defined control system may be independent of the SDON artificial intelligent control system and may operate independently; and the open source SDN controller source kernel is based on the open-source Open Service Gateway Initiative (OSGI) architecture, and the SDON artificial intelligent control system may be loaded and unloaded dynamically according to the SDON controller load, user requirements, SDON software version compatibility and other factors, to satisfy the forward compatibility for the non-artificial intelligent version of the SDON. After the SDON artificial intelligent control system is unloaded dynamically, the SDON controller can still rely on the general SDON programming to define the control system and realize the function of the previous non-artificial intelligence version of the SDON without being affected.

Optionally, the SDON artificial intelligent control system includes an intelligent decision manager, a cognitive learning manager and an optical network resource optimization knowledge base.

The intelligent decision manager may be configured to: process the network-wide resource optimization request contained in the application service; forward the optimization strategy, optimization algorithm mathematical model, network model to be optimized and latest optimized calculation result contained in the network-wide resource optimization request to the cognitive learning manager; correct the optimization strategy and optimization algorithm mathematical model according to the analysis results returned from the cognitive learning manager; and return the corrected optimization strategy and optimization algorithm mathematical model to the resource optimization strategy controller.

The cognitive learning manager may be configured to: analyze the optimization strategy, optimization algorithm mathematical model, network model to be optimized and latest optimized calculation result contained in the network-wide resource optimization request sent by the intelligent decision manager, and invoke the case information (including previous optimization strategies, mapping relationship between the optimization algorithm mathematical models and optimized network models, current optimal calculation result) in the optical network resource optimization knowledge base to match with the optimization strategy, optimization algorithm mathematical model and network model to be optimized contained in the network-wide resource optimization request for analyzing; if it is found that the optimization strategy, optimization algorithm mathematical model and network model to be optimized contained in the network-wide resource optimization request match with the case information in the knowledge base and the optimized calculation result in the matching case information (for example, similar case information) is superior to the latest optimized calculation result contained in the network-wide resource optimization request, then the correcting suggestion for the optimization strategy, optimization algorithm mathematical model and others contained in the network-wide resource optimization request is provided; if it is found that the optimization strategy, optimization algorithm mathematical model and network model to be optimized contained in the network-wide resource optimization request cannot match with any case information in the knowledge base or the latest optimized calculation result contained in the network-wide resource optimization request is superior to the optimized calculation result in the matching case information, then the optimization strategy, optimization algorithm mathematical model, network model to be optimized and latest optimized calculation result contained in the network-wide resource optimization request are recorded or updated as new case information in the knowledge base, and the suggestion of not performing the correction is returned.

The cognitive learning manager may complete the above matching analysis by constructing the neural network controller and other intelligent components.

The optical network resource optimization knowledge base, i.e., the database in the step S40, may be configured to: record the resource optimization strategy, the mapping relationship between the optimization algorithm mathematical models and the optimized network models, and the corresponding latest optimized calculation result one by one.

The substantial function modules of the general SDON programming defined control system are the known technologies in the art, and will not be described here.

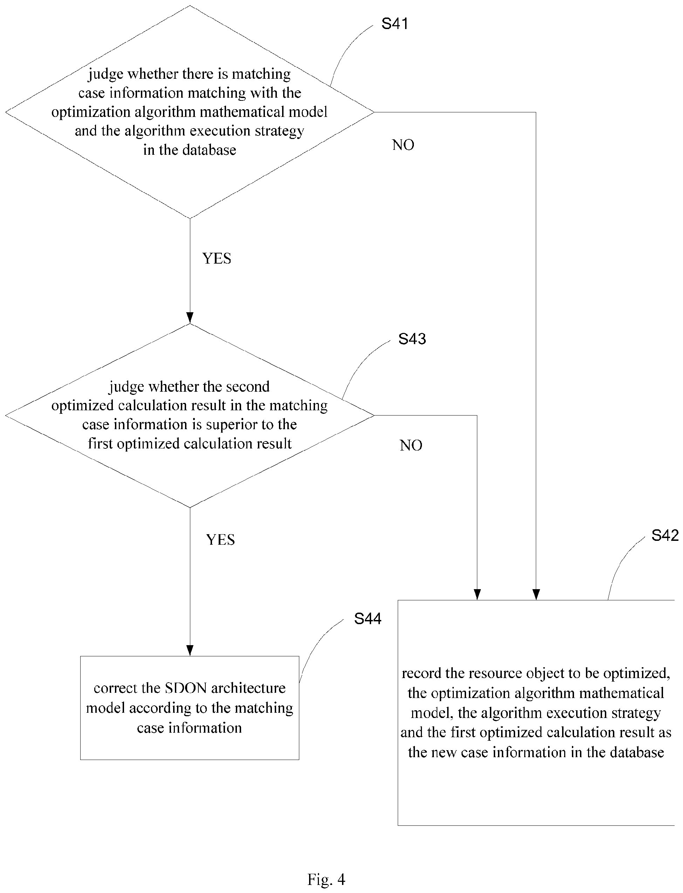

As shown in Fig. 4, in this embodiment, the step S40 may include the following steps S41 to S44.

In step S41, whether there is matching case information matching with the optimization algorithm mathematical model and algorithm execution strategy in the database is judged.

If not, that is, when there is no matching case information matching with the optimization algorithm mathematical model and algorithm execution strategy in the database, enter the step S42 in which the resource object to be optimized, the optimization algorithm mathematical model, the algorithm execution strategy and the first optimized calculation result are recorded as the new case information in the database.

If so, that is, when there is the matching case information matching with the optimization algorithm mathematical model and algorithm execution strategy in the database, enter the step S43 in which it is judged whether the second optimized calculation result in the matching case information is superior to the first optimized calculation result; if so, that is, when the second optimized calculation result in the matching case information is superior to the first optimized calculation result, enter the step S44 in which the SDON architecture model is corrected according to the matching case information.

If not, that is, when the second optimized calculation result in the matching case information is not superior to the first optimized calculation result, for example, when the first optimized calculation result is superior to the second optimized calculation result in the matching case information, enter the step S42 in which the resource object to be optimized in the application service request, the optimization algorithm mathematical model, the algorithm execution strategy and the first optimized calculation result are recorded as the new case information in the database, and optionally, the resource optimization strategic intent in the application service request may further be recorded as the new case information in the database.

In this embodiment, the step S44 may include: providing a correcting suggestion or adjusting suggestion for the optimization algorithm mathematical model and the algorithm execution strategy according to the matching case information.

In this embodiment, after the step S42, the method may further include: allocating programmable network resources to the resource object to be optimized according to the first optimized calculation result, and updating the network-wide-programmable virtual network resource information according to the allocated programmable network resources.

### Second embodiment

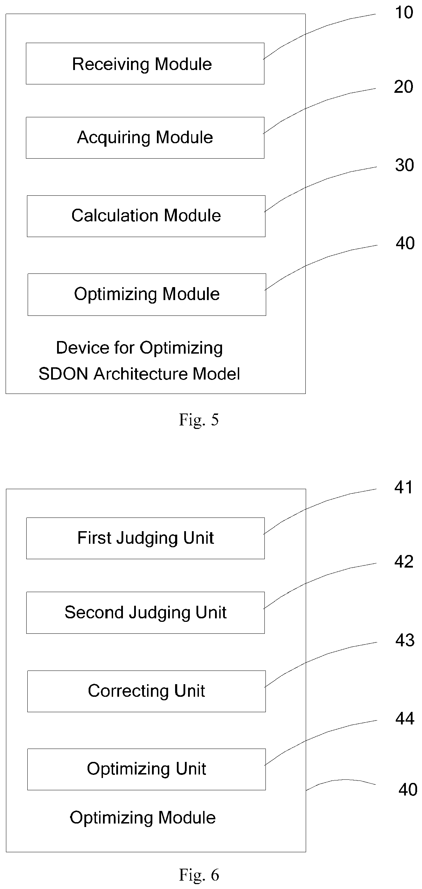

As shown in Fig. 5, in this embodiment, a device for optimizing a SDON architecture model includes: a receiving module 10 configured to receive an application service request including a resource object to be optimized and resource optimization strategic intent; an acquiring module 20 configured to acquire network-wide-programmable virtual network resource information according to the application service request, and generate an optimization algorithm mathematical model and an algorithm execution strategy; a calculation module 30 configured to perform a calculation according to the optimization algorithm mathematical model, the algorithm execution strategy and the network-wide-programmable virtual network resource information to obtain a first optimized calculation result; and an optimizing module 40 configured to invoke case information in a database, and optimize the SDON architecture model according to the case information and the first optimized calculation result.

In this embodiment, the artificial intelligence features are added on the basis of the general SDON controller architecture system, and the dynamic optimization and correction of global concurrent optimization algorithm model of the SDON controller are realized through the artificial intelligence processing procedure such as cognition and learning.

As shown in Fig. 2, in this embodiment, the SDON controller architecture system may include: an application layer, a controller layer and a transmission device layer, where the application layer may include several application services; the controller layer includes a northbound API layer, an application module sub-layer, an open source SDN controller source kernel and a southbound API layer; and the transmission device layer may include a southbound interface protocol proxy and a physical layer.

The northbound API layer may be configured to implement the interaction with the application layer, acquire the application service request required by the user, and reply with a service implementation result.

The application module sub-layer may be configured to implement application service functions of the artificial intelligence features, and ordinary services, and is the core functional sub-layer of the SDON controller layer.

The open source SDN controller source kernel may be configured to provide the controller with a platform support function as a software operating system.

The southbound API layer may be configured to implement the interaction with the transmission device layer, issue an application service configuration request, and acquire a service configuration processing result.

The southbound interface protocol proxy may be configured to implement the interaction with the controller layer, acquire the application service configuration request message, parse the request message and forward the parsed request message to the physical layer for processing.

The physical layer may roughly configured to include a programmable optical network component and a monitoring management module (may be composed of them), and the physical layer may be configured to perform operations such as configuration and monitoring on the programmable optical network component according to contents of the parsed message transmitted by the southbound interface protocol proxy.

As shown in Fig. 3, in this embodiment, the application module sub-layer may include the general SDON programming defined control system and the SDON artificial intelligent control system, where the general SDON programming defined control system may be independent of the SDON artificial intelligent control system and may operate independently; and the open source SDN controller source kernel is based on the open-source OSGI architecture, and the SDON artificial intelligent control system may be loaded and unloaded dynamically according to the SDON controller load, user requirements, SDON software version compatibility and other factors, to satisfy the forward compatibility for the non-artificial intelligent version of the SDON. After the SDON artificial intelligent control system is unloaded dynamically, the SDON controller can still rely on the general SDON programming to define the control system and realize the function of the previous non-artificial intelligence version of the SDON without being affected.

Optionally, the SDON artificial intelligent control system includes an intelligent decision manager, a cognitive learning manager and an optical network resource optimization knowledge base.

The intelligent decision manager may be configured to: process the network-wide resource optimization request contained in the application service; forward the optimization strategy, optimization algorithm mathematical model, network model to be optimized and latest optimized calculation result contained in the network-wide resource optimization request to the cognitive learning manager; correct the optimization strategy and optimization algorithm mathematical model according to the analysis results returned from the cognitive learning manager; and return the corrected optimization strategy and optimization algorithm mathematical model to the resource optimization strategy controller.

The cognitive learning manager may be configured to: analyze the optimization strategy, optimization algorithm mathematical model, network model to be optimized and latest optimized calculation result contained in the network-wide resource optimization request sent by the intelligent decision manager, and invoke the case information (including previous optimization strategies, mapping relationship between the optimization algorithm mathematical models and optimized network models, current optimal calculation result) in the optical network resource optimization knowledge base to match with the optimization strategy, optimization algorithm mathematical model and network model to be optimized contained in the network-wide resource optimization request for analyzing; if it is found that the optimization strategy, optimization algorithm mathematical model and network model to be optimized contained in the network-wide resource optimization request match with the case information in the knowledge base and the optimized calculation result in the matching case information (for example, similar case information) is superior to the latest optimized calculation result contained in the network-wide resource optimization request, then the correcting suggestion for the optimization strategy, optimization algorithm mathematical model and others contained in the network-wide resource optimization request is provided; if it is found that the optimization strategy, optimization algorithm mathematical model and network model to be optimized contained in the network-wide resource optimization request cannot match with any case information in the knowledge base or the latest optimized calculation result contained in the network-wide resource optimization request is superior to the optimized calculation result in the matching case information, then the optimization strategy, optimization algorithm mathematical model, network model to be optimized and latest optimized calculation result contained in the network-wide resource optimization request are recorded or updated as new case information in the knowledge base, and the suggestion of not performing the correction is returned.

The cognitive learning manager may complete the above matching analysis by constructing the neural network controller and other intelligent components.

The optical network resource optimization knowledge base, i.e., the database in the step S40, may be configured to: record the resource optimization strategy, the mapping relationship between the optimization algorithm mathematical models and the optimized network models, and the corresponding latest optimized calculation result one by one.

The substantial function modules of the general SDON programming defined control system are the known technologies in the art, and will not be described here.

As shown in Fig. 6, in this embodiment, the optimizing module 40 may include: a first judging unit 41 configured to judge whether there is matching case information matching with the optimization algorithm mathematical model and algorithm execution strategy in the database; a second judging unit 42 configured to judge whether a second optimized calculation result in the matching case information is superior to the first optimized calculation result when there is the matching case information matching with the optimization algorithm mathematical model and algorithm execution strategy in the database; a correcting unit 43 configured to correct the SDON architecture model according to the matching case information when the second optimized calculation result in the matching case information is superior to the first optimized calculation result; and an optimizing unit 44 configured to optimize the SDON architecture model according to the first optimized calculation result when the first optimized calculation result is superior to the second optimized calculation result in the matching case information.

In this embodiment, the correcting unit 43 may be configured to: provide a correcting suggestion or adjusting suggestion for the optimization algorithm mathematical model and the algorithm execution strategy according to the matching case information.

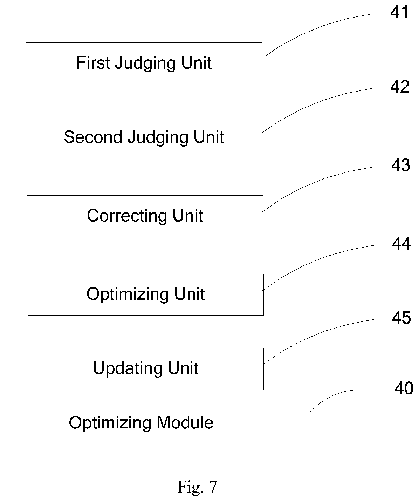

As shown in Fig. 7, in this embodiment, the optimizing module 40 may further include: an updating unit 45 configured to record the resource object to be optimized, the optimization algorithm mathematical model, the algorithm execution strategy and the first optimized calculation result as new case information in the database when there is no matching case information matching with the optimization algorithm mathematical model and algorithm execution strategy in the database or when the first optimized calculation result is superior to the second optimized calculation result in the matching case information.

In this embodiment, the optimizing module 40 may further include: a resource allocation unit configured to allocate programmable network resources to the resource object to be optimized according to the first optimized calculation result, and update the network-wide-programmable virtual network resource information according to the allocated programmable network resources.

### Third embodiment

In this embodiment, a system for optimizing a SDON architecture model includes a memory, a processor and at least one application stored in the memory and configured to be executed by the processor, where the at least one application is configured to perform the method for optimizing the SDON architecture model described in the first embodiment.

### Fourth embodiment

The embodiment of the disclosure provides a computer-readable storage medium storing a computer program thereon, where the program, when executed by a processor, implements the method embodiment described in any one of the above-mentioned embodiments of the method for optimizing the SDON architecture model.

It should be noted that the above-mentioned embodiments of the device, system and computer-readable storage medium belong to the same concept as the method embodiments, the implementation processes thereof refer to the method embodiments, and the technical features in the method embodiments are applicable in the device embodiments, which will not be repeated here.

An embodiment of the disclosure provides a computer-readable storage medium storing the computer executable instructions which, when executed, implement the method for optimizing the SDON architecture model described above.

The embodiments of the disclosure provide the method, device and system for optimizing the SDON architecture model and the computer-readable storage medium, according to the claims as appended. The artificial intelligence features are added on the basis of the general SDON controller architecture system, and the dynamic optimization and correction of global concurrent optimization algorithm model of the SDON controller are realized through the artificial intelligence processing procedures such as cognition and learning.

Through the above description of the embodiments, it is clear for those skilled in the art that the above embodiment methods may be implemented by means of software plus the required general-purpose hardware platform, or of course, may be implemented by means of hardware. Based on such understanding, the technical solution of the disclosure in itself or the part which contributes to the prior art may be embodied in the form of software product. The computer software product is stored in a storage medium (such as ROM/RAM, disk, compact disc), and includes a number of instructions used to enable a terminal device (which may be mobile phone, computer, server, air conditioner, network equipment or the like) to perform the methods described in different embodiments of the disclosure.

It may be understood by those ordinary skilled in the art that the functional modules/units in all or some of the steps, systems, and devices in the methods disclosed above may be implemented as the software, firmware, hardware and the suitable combination thereof. In the hardware embodiments, the division among the functional modules/units mentioned in the above description does not necessarily correspond to the division of the physical components; for example, one physical component may have multiple functions, or one function or step may be performed jointly by several physical components. Some or all components may be implemented as the software executed by the processor such as digital signal processor or microprocessor, or implemented as the hardware, or implemented as the integrated circuit such as application specific integrated circuit. Such software may be distributed over the computer-readable media which may include the computer storage medium (or non-transient medium) and the communication medium (or transient medium). As can be well known by those ordinary skilled in the art, the term "computer storage medium" includes the volatile, non-volatile, removable and un-removable media implemented in any method or technique for storing the information (such as computer-readable instructions, data structures, program modules, or other data). The computer storage medium includes but not limited to Random Access Memory (RAM), Read-Only Memory (ROM), Electrically Erasable Programmable Read-only Memory (EEPROM), flash or other memory technology, Compact Disc Read-Only Memory (CD-ROM), Digital Versatile Disc (DVD) or other optical disc storage, magnetic box, magnetic tape, magnetic disk storage or other magnetic storage device, or any other medium which can be used to store the desired information and can be accessed by a computer. Furthermore, it is well known by those ordinary skilled in the art that the communication medium generally contains the computer-readable instructions, data structures, program modules, or other data in the modulated data signal such as carrier or other transmission mechanism, and may include any information delivery medium.

### Industrial Applicability

The embodiments of the disclosure provide the method, device and system for optimizing the SDON architecture model and the computer-readable storage medium, according to the appended independent claims. Advantageous features are provided in the dependent claims.

The artificial intelligence features are added on the basis of the general SDON controller architecture system, and the dynamic optimization and correction of global concurrent optimization algorithm model of the SDON controller are realized through the artificial intelligence processing procedures such as cognition and learning.

## Claims

1. A method for optimizing a Software Defined Optical Network, SDON, controller architecture model, comprising:
receiving (S10) an application service request, the application service request comprising a resource object to be optimized and resource optimization strategic intent;
acquiring (S20) network-wide-programmable virtual network resource information according to the application service request, and generating (S20) an optimization algorithm mathematical model and an algorithm execution strategy;
performing (S30) a calculation according to the optimization algorithm mathematical model, the algorithm execution strategy and the network-wide-programmable virtual network resource information to obtain a first optimized calculation result; and
invoking (S40) case information in a database, and optimizing (S40) the SDON controller architecture model according to the case information and the first optimized calculation result,
wherein optimizing (S40) the SDON controller architecture model according to the case information and the first optimized calculation result comprises:
judging (S41) whether there is matching case information matching with the optimization algorithm mathematical model and the algorithm execution strategy in the database;
judging (S43) whether a second optimized calculation result in the matching case information is superior to the first optimized calculation result when there is the matching case information matching with the optimization algorithm mathematical model and the algorithm execution strategy in the database;
correcting (S44) the SDON controller architecture model according to the matching case information when the second optimized calculation result in the matching case information is superior to the first optimized calculation result; and
optimizing the SDON controller architecture model according to the first optimized calculation result when the first optimized calculation result is superior to the second optimized calculation result in the matching case information,
wherein correcting (S44) the SDON controller architecture model according to the matching case information comprises:
providing a correcting suggestion or adjusting suggestion for the optimization algorithm mathematical model and the algorithm execution strategy according to the matching case information.

2. The method for optimizing the SDON controller architecture model according to claim 1, wherein after judging (S41) whether there is matching case information matching with the optimization algorithm mathematical model and the algorithm execution strategy in the database, the method further comprises:
recording (S42) the resource object to be optimized, the optimization algorithm mathematical model, the algorithm execution strategy and the first optimized calculation result as new case information in the database when there is no matching case information matching with the optimization algorithm mathematical model and the algorithm execution strategy in the database; and
after judging (S43) whether a second optimized calculation result in the matching case information is superior to the first optimized calculation result, the method further comprises:
recording (S42) the resource object to be optimized, the optimization algorithm mathematical model, the algorithm execution strategy and the first optimized calculation result as new case information in the database when the first optimized calculation result is superior to the second optimized calculation result in the matching case information.

3. The method for optimizing the SDON controller architecture model according to claim 2, wherein after recording (S42) the resource object to be optimized, the optimization algorithm mathematical model, the algorithm execution strategy and the first optimized calculation result as new case information in the database, the method further comprises:
allocating programmable network resources to the resource object to be optimized according to the first optimized calculation result, and updating the network-wide-programmable virtual network resource information according to the allocated programmable network resources.

4. A device for optimizing a Software Defined Optical Network, SDON, controller architecture model, comprising:
a receiving module (10) configured to receive an application service request, the application service request comprising a resource object to be optimized and resource optimization strategic intent;
an acquiring module (20) configured to acquire network-wide-programmable virtual network resource information according to the application service request, and generate an optimization algorithm mathematical model and an algorithm execution strategy;
a calculation module (30) configured to perform a calculation according to the optimization algorithm mathematical model, the algorithm execution strategy and the network-wide-programmable virtual network resource information to obtain a first optimized calculation result; and
an optimizing module (40) configured to invoke case information in a database, and optimize the SDON controller architecture model according to the case information and the first optimized calculation result,
wherein the optimizing module (40) comprises:
a first judging unit (41) configured to judge whether there is matching case information matching with the optimization algorithm mathematical model and the algorithm execution strategy in the database;
a second judging unit (42) configured to judge whether a second optimized calculation result in the matching case information is superior to the first optimized calculation result when there is the matching case information matching with the optimization algorithm mathematical model and the algorithm execution strategy in the database;
a correcting unit (43) configured to correct the SDON controller architecture model according to the matching case information when the second optimized calculation result in the matching case information is superior to the first optimized calculation result; and
an optimizing unit (44) configured to optimize the SDON controller architecture model according to the first optimized calculation result when the first optimized calculation result is superior to the second optimized calculation result in the matching case information,
wherein the correcting unit (43) is configured to:
provide a correcting suggestion or adjusting suggestion for the optimization algorithm mathematical model and the algorithm execution strategy according to the matching case information.

5. The device for optimizing the SDON controller architecture model according to claim 4, wherein the optimizing module (40) further comprises:
an updating unit (45) configured to record the resource object to be optimized, the optimization algorithm mathematical model, the algorithm execution strategy and the first optimized calculation result as new case information in the database when there is no matching case information matching with the optimization algorithm mathematical model and the algorithm execution strategy in the database or when the first optimized calculation result is superior to the second optimized calculation result in the matching case information.

6. The device for optimizing the SDON controller architecture model according to claim 4, wherein the optimizing module (40) further comprises:
a resource allocation unit configured to allocate programmable network resources to the resource object to be optimized according to the first optimized calculation result, and update the network-wide-programmable virtual network resource information according to the allocated programmable network resources.

7. A system for optimizing a Software Defined Optical Network, SDON, controller architecture model, comprising a memory, a processor and at least one application stored in the memory and configured to be executed by the processor, wherein the at least one application is configured to perform the method for optimizing the SDON controller architecture model of any one of claims 1-3.

8. A computer-readable storage medium storing a computer program thereon, wherein the program, when executed by a processor, implements the method for optimizing the Software Defined Optical Network, SDON controller architecture model of any one of claims 1-3.

## Patentansprüche

1. Verfahren zum Optimieren eines SDON [Software Defined Optical Network] Steuergerät-Architekturmodells, umfassend:
Empfangen (S10) einer Anwendungsdienstanfrage, wobei die Anwendungsdienstanfrage ein zu optimierendes Ressourcenobjekt und eine strategische Absicht zur Ressourcenoptimierung umfasst; Erfassen (S20) von über ein Netzwerk programmierbaren, virtuellen
Netzwerkressourceninformationen gemäß der Anwendungsdienstanfrage, und Erzeugen (S20) eines mathematischen Modells eines Optimierungsalgorithmus und einer Algorithmus-Ausführungsstrategie;
Durchführen (S30) einer Berechnung gemäß dem mathematischen Modell des Optimierungsalgorithmus, der Algorithmus-Ausführungsstrategie und der über ein Netzwerk programmierbaren virtuellen Netzwerkressourceninformationen, um ein erstes optimiertes Berechnungsergebnis zu erhalten; und
Abrufen (S40) von Fallinformationen in einer Datenbank und Optimieren (S40) des SDON-Steuergerät-Architekturmodells gemäß den Fallinformationen und dem ersten optimierten Berechnungsergebnis,
wobei das Optimieren (S40) des SDON-Steuergerät-Architekturmodells gemäß den Fallinformationen und dem ersten optimierten Berechnungsergebnis umfasst:
Beurteilen (S41), ob es übereinstimmende Fallinformationen in der Datenbank gibt, die mit dem mathematischen Modell des Optimierungsalgorithmus und der Algorithmus-Ausführungsstrategie übereinstimmen;
Beurteilen (S43), ob ein zweites optimiertes Berechnungsergebnis in den übereinstimmenden Fallinformationen größer ist als das erste optimierte Berechnungsergebnis, wenn es die übereinstimmenden Fallinformationen, die mit dem mathematischen Modell des Optimierungsalgorithmus und der Algorithmus-Ausführungsstrategie übereinstimmen, in der Datenbank gibt;
Korrigieren (S44) des SDON Steuergerät-Architekturmodells gemäß den übereinstimmenden Fallinformationen, wenn das zweite optimierte Berechnungsergebnis in den übereinstimmenden Fallinformationen größer als das erste optimierte Berechnungsergebnis ist; und
Optimieren des SDON-Steuergerät-Architekturmodells gemäß dem ersten optimierten Berechnungsergebnis, wenn das erste optimierte Berechnungsergebnis größer als das zweite optimierte Berechnungsergebnis in den übereinstimmenden Fallinformationen ist,
wobei das Korrigieren (S44) des SDON-Steuergerät-Architekturmodells gemäß den übereinstimmenden Fallinformationen umfasst:
Bereitstellen eines Korrekturvorschlags oder Anpassungsvorschlags für das mathematische Modell des Optimierungsalgorithmus und die Algorithmus-Ausführungsstrategie gemäß den übereinstimmenden Fallinformationen.

2. Verfahren zum Optimieren des SDON-Steuergerät-Architekturmodells nach Anspruch 1, wobei nach dem Beurteilen (S41), ob es übereinstimmende Fallinformationen, die mit dem mathematischen Modell des Optimierungsalgorithmus und der Algorithmus-Ausführungsstrategie übereinstimmen, in der Datenbank gibt, das Verfahren ferner umfasst:
Aufzeichnen (S42) des zu optimierenden Ressourcenobjekts, des mathematischen Modells des Optimierungsalgorithmus, der Algorithmus-Ausführungsstrategie und des ersten optimierten Berechnungsergebnisses als neue Fallinformationen in der Datenbank, wenn es keine übereinstimmenden Fallinformationen, die mit dem mathematischen Modell des Optimierungsalgorithmus und der Algorithmus-Ausführungsstrategie übereinstimmen, in der Datenbank gibt; und
nach dem Beurteilen (S43), ob ein zweites optimiertes Berechnungsergebnis in den übereinstimmenden Fallinformationen größer als das erste optimierte Berechnungsergebnis ist, das Verfahren ferner umfasst:
Aufzeichnen (S42) des zu optimierenden Ressourcenobjekts, des mathematischen Modells des Optimierungsalgorithmus, der Algorithmus-Ausführungsstrategie und des ersten optimierten Berechnungsergebnisses als neue Fallinformationen in der Datenbank, wenn das erste optimierte Berechnungsergebnis größer als das zweite optimierte Berechnungsergebnis in den übereinstimmenden Fallinformationen ist.

3. Verfahren zum Optimieren des SDON-Steuergerät-Architekturmodells nach Anspruch 2, wobei, nach dem Aufzeichnen (S42) des zu optimierenden Ressourcenobjekts, des mathematischen Modells des Optimierungsalgorithmus, der Algorithmus-Ausführungsstrategie und des ersten optimierten Berechnungsergebnisses als neue Fallinformationen in der Datenbank, das Verfahren ferner umfasst:
Zuweisen von programmierbaren Netzwerkressourcen an das zu optimierende Ressourcenobjekt gemäß dem ersten optimierten Berechnungsergebnis, und Aktualisieren der über ein Netzwerk programmierbaren, virtuellen Netzwerkressourceninformationen gemäß den zugewiesenen programmierbaren Netzwerkressourcen.

4. Vorrichtung zur Optimierung eines SDON-Steuergerät-Architekturmodells, umfassend:
ein Empfangsmodell (10), das derart konfiguriert ist, dass es eine Anwendungsdienstanfrage empfängt, wobei die Anwendungsdienstanfrage ein zu optimierendes Ressourcenobjekt und eine strategische Absicht zur Ressourcenoptimierung umfasst;
ein Erfassungsmodul (20), das derart konfiguriert ist, dass es gemäß der Anwendungsdienstanfrage über ein Netzwerk programmierbare virtuelle Netzwerkressourceninformationen erfasst und ein mathematisches Modell eines Optimierungsalgorithmus und eine Algorithmus-Ausführungsstrategie erzeugt;
ein Berechnungsmodul (30), das derart konfiguriert ist, dass es eine Berechnung gemäß dem mathematischen Modell des Optimierungsalgorithmus, der Algorithmus-Ausführungsstrategie und der über ein Netzwerk programmierbaren virtuellen Netzwerkressourceninformationen durchführt, um ein erstes optimiertes Berechnungsergebnis zu erhalten; und
ein Optimierungsmodul (40), das derart konfiguriert ist, dass es Fallinformationen aus einer Datenbank abruft und das SDON-Steuergerät-Architekturmodell gemäß den Fallinformationen und dem ersten optimierten Berechnungsergebnis optimiert,
wobei das Optimierungsmodul (40) umfasst:
eine erste Beurteilungseinheit (41), die derart konfiguriert ist, dass sie beurteilt, ob es übereinstimmende Fallinformationen, die mit dem mathematischen Modell des Optimierungsalgorithmus und der Algorithmus-Ausführungsstrategie übereinstimmen, in der Datenbank gibt;
eine zweite Beurteilungseinheit (42), die derart konfiguriert ist, dass sie beurteilt, ob ein zweites optimiertes Berechnungsergebnis in den übereinstimmenden Fallinformationen größer ist als das erste optimierte Berechnungsergebnis, wenn es übereinstimmende Fallinformationen, die mit dem mathematischen Modell des Optimierungsalgorithmus und der Algorithmus-Ausführungsstrategie übereinstimmen, in der Datenbank gibt;
eine Korrektureinheit (43), die derart konfiguriert ist, dass sie das SDON-Steuergerät-Architekturmodell gemäß den übereinstimmenden Fallinformationen korrigiert, wenn das zweite optimierte Berechnungsergebnis in den übereinstimmenden Fallinformationen größer als das erste optimierte Berechnungsergebnis ist; und
eine Optimierungseinheit (44), die derart konfiguriert ist, dass sie das SDON-Steuergerät-Architekturmodell gemäß dem ersten optimierten Berechnungsergebnis optimiert, wenn das erste optimierte Berechnungsergebnis größer als das zweite optimierte Berechnungsergebnis in den übereinstimmenden Fallinformationen ist,
wobei die Korrektureinheit (43) konfiguriert ist, um:
einen Korrekturvorschlag oder einen Anpassungsvorschlag für das mathematische Modell des Optimierungsalgorithmus und die Algorithmus-Ausführungsstrategie gemäß den übereinstimmenden Fallinformationen bereitstellen.

5. Vorrichtung zur Optimierung des SDON-Steuergerät-Architekturmodells nach Anspruch 4, wobei das Optimierungsmodul (40) ferner umfasst:
eine Aktualisierungseinheit (45), die derart konfiguriert ist, dass sie das zu optimierende Ressourcenobjekt, das mathematische Modell des Optimierungsalgorithmus, die Algorithmus-Ausführungsstrategie und das erste optimierte Berechnungsergebnis als neue Fallinformationen in der Datenbank speichert, wenn es keine übereinstimmenden Fallinformationen, die mit dem mathematischen Modell des Optimierungsalgorithmus und der Algorithmus-Ausführungsstrategie übereinstimmen, in der Datenbank gibt, oder wenn das erste optimierte Berechnungsergebnis in den übereinstimmenden Fallinformationen größer als das zweite optimierte Berechnungsergebnis ist.

6. Vorrichtung zur Optimierung des SDON-Steuergerät-Architekturmodells nach Anspruch 4, wobei das Optimierungsmodul (40) ferner umfasst:
eine Ressourcenzuweisungseinheit, die derart konfiguriert ist, dass sie dem zu optimierenden Ressourcenobjekt gemäß dem ersten optimierten Berechnungsergebnis programmierbare Netzwerkressourcen zuweist, und die über ein Netzwerk programmierbaren, virtuellen Netzwerkressourceninformationen gemäß den zugeordneten programmierbaren Netzwerkressourcen aktualisiert.

7. System zur Optimierung eines SDON-Steuergerät-Architekturmodells, umfassend einen Speicher, einen Prozessor und zumindest eine Anwendung, die in dem Speicher gespeichert ist und derart konfiguriert ist, dass sie durch den Prozessor ausgeführt wird, wobei die zumindest eine Anwendung derart konfiguriert ist, dass sie das Verfahren zur Optimierung des SDON-Steuergerät-Architekturmodells gemäß einem der Ansprüche 1 bis 3 durchführt.

8. Computerlesbares Speichermedium, das ein Computerprogramm speichert, wobei das Programm, wenn es von einem Prozessor ausgeführt wird, das Verfahren zur Optimierung des SDON- Steuergerät-Architekturmodells gemäß einem der Ansprüche 1 bis 3 implementiert.

## Revendications

1. Procédé d'optimisation d'un modèle d'architecture de dispositif de commande SDON [software defined optical network - réseau optique défini par logiciel], comprenant :
la réception (S10) d'une requête de service d'application, la requête de service d'application comprenant un objet de ressource à optimiser et une intention stratégique d'optimisation de ressource ;
l'acquisition (S20) d'informations de ressource de réseau virtuel programmable par le biais d'un réseau selon la requête de service d'application, et la génération (S20) d'un modèle mathématique d'algorithme d'optimisation et d'une stratégie d'exécution d'algorithme ;
la réalisation (S30) d'un calcul selon le modèle mathématique d'algorithme d'optimisation, la stratégie d'exécution d'algorithme et les informations de ressource de réseau virtuel programmable par le biais d'un réseau pour obtenir un premier résultat de calcul optimisé ; et
la récupération (S40) d'informations de cas dans une base de données, et l'optimisation (S40) du modèle d'architecture de dispositif de commande SDON selon les informations de cas et le premier résultat de calcul optimisé,
dans lequel l'optimisation (S40) du modèle d'architecture de dispositif de commande SDON selon les informations de cas et le premier résultat de calcul optimisé comprend :
l'évaluation (S41) pour savoir s'il existe une correspondance entre des informations de cas et le modèle mathématique d'algorithme d'optimisation et la stratégie d'exécution d'algorithme dans la base de données ;
l'évaluation (S43) pour savoir si un deuxième résultat de calcul optimisé dans les informations de cas de correspondance est supérieur au premier résultat de calcul optimisé lorsqu'il existe la correspondance entre les informations de cas et le modèle mathématique d'algorithme d'optimisation et la stratégie d'exécution d'algorithme dans la base de données ;
la correction (S44) du modèle d'architecture de dispositif de commande SDON selon les informations de cas de correspondance lorsque le deuxième résultat de calcul optimisé dans les informations de cas de correspondance est supérieur au premier résultat de calcul optimisé ; et
l'optimisation du modèle d'architecture de dispositif de commande SDON selon le premier résultat de calcul optimisé lorsque le premier résultat de calcul optimisé est supérieur au deuxième résultat de calcul optimisé dans les informations de cas de correspondance,
dans lequel la correction (S44) du modèle d'architecture de dispositif de commande SDON selon les informations de cas de correspondance comprend :
la fourniture d'une suggestion de correction ou d'une suggestion d'ajustement pour le modèle mathématique d'algorithme d'optimisation et la stratégie d'exécution d'algorithme selon les informations de cas de correspondance.

2. Procédé d'optimisation du modèle d'architecture de dispositif de commande SDON selon la revendication 1, dans lequel après l'évaluation (S41) pour savoir s'il existe une correspondance entre les informations de cas et le modèle mathématique d'algorithme d'optimisation et la stratégie d'exécution d'algorithme dans la base de données, lequel procédé comprend en outre :
l'enregistrement (S42) de l'objet de ressource à optimiser, du modèle mathématique d'algorithme d'optimisation, de la stratégie d'exécution d'algorithme et du premier résultat de calcul optimisé en tant que nouvelles informations de cas dans la base de données lorsqu'il n'existe pas de correspondance entre les informations de cas et le modèle mathématique d'algorithme d'optimisation et la stratégie d'exécution d'algorithme dans la base de données ; et
après l'évaluation (S43) pour savoir si un deuxième résultat de calcul optimisé dans les informations de cas de correspondance est supérieur au premier résultat de calcul optimisé, lequel procédé comprend en outre :
l'enregistrement (S42) de l'objet de ressource à optimiser, du modèle mathématique d'algorithme d'optimisation, de la stratégie d'exécution d'algorithme et du premier résultat de calcul optimisé en tant que nouvelles informations de cas dans la base de données lorsque le premier résultat de calcul optimisé est supérieur au deuxième résultat de calcul optimisé dans les informations de cas de correspondance.

3. Procédé d'optimisation du modèle d'architecture de dispositif de commande SDON selon la revendication 2, dans lequel après l'enregistrement (S42) de l'objet de ressource à optimiser, du modèle mathématique d'algorithme d'optimisation, de la stratégie d'exécution d'algorithme et du premier résultat de calcul optimisé en tant que nouvelles informations de cas dans la base de données, le procédé comprend en outre :
l'attribution de ressource de réseau programmable à l'objet de ressource à optimiser selon le premier résultat de calcul optimisé, et la mise à jour des informations de ressource de réseau virtuel programmable par le biais d'un réseau selon les ressources de réseau programmable attribuées.

4. Dispositif d'optimisation d'un modèle d'architecture de dispositif de commande SDON, comprenant :
un modèle de réception (10) configuré pour recevoir une requête de service d'application, la requête de service d'application comprenant un objet de ressource à optimiser et une intention stratégique d'optimisation de ressource ;
un module d'acquisition (20) configuré pour acquérir des informations de ressource de réseau virtuel programmable par le biais d'un réseau selon la requête de service d'application, et pour générer un modèle mathématique d'algorithme d'optimisation et une stratégie d'exécution d'algorithme ;
un module de calcul (30) configuré pour réaliser un calcul selon le modèle mathématique d'algorithme d'optimisation, la stratégie d'exécution d'algorithme et les informations de ressource de réseau virtuel programmable par le biais d'un réseau pour obtenir un premier résultat de calcul optimisé ; et
un module d'optimisation (40) configuré pour récupérer des informations de cas dans une base de données, et pour optimiser le modèle d'architecture de dispositif de commande SDON selon les informations de cas et le premier résultat de calcul optimisé,
dans lequel le module d'optimisation (40) comprend :
une première unité d'évaluation (41) configurée pour évaluer s'il existe une correspondance entre des informations de cas et le modèle mathématique d'algorithme d'optimisation et la stratégie d'exécution d'algorithme dans la base de données ;
une deuxième unité d'évaluation (42) configurée pour évaluer si un deuxième résultat de calcul optimisé dans les informations de cas de correspondance est supérieur au premier résultat de calcul optimisé lorsqu'il existe une correspondance entre les informations de cas et le modèle mathématique d'algorithme d'optimisation et la stratégie d'exécution d'algorithme dans la base de données ;
une unité de correction (43) configurée pour corriger le modèle d'architecture de dispositif de commande SDON selon les informations de cas de correspondance lorsque le deuxième résultat de calcul optimisé dans les informations de cas de correspondance est supérieur au premier résultat de calcul optimisé ; et
une unité d'optimisation (44) configurée pour optimiser le modèle d'architecture de dispositif de commande SDON selon le premier résultat de calcul optimisé lorsque le premier résultat de calcul optimisé est supérieur au deuxième résultat de calcul optimisé dans les informations de cas de correspondance,
dans lequel l'unité de correction (43) est configurée pour :
fournir une suggestion de correction ou une suggestion d'ajustement pour le modèle mathématique d'algorithme d'optimisation et la stratégie d'exécution d'algorithme selon les informations de cas de correspondance.

5. Dispositif d'optimisation du modèle d'architecture de dispositif de commande SDON selon la revendication 4,
dans lequel le module d'optimisation (40) comprend en outre :
une unité de mise à jour (45) configurée pour enregistrer l'objet de ressource à optimiser, le modèle mathématique d'algorithme d'optimisation, la stratégie d'exécution d'algorithme et le premier résultat de calcul optimisé en tant que nouvelles informations de cas dans la base de données lorsqu'il n'existe pas de correspondance entre des informations de cas et le modèle mathématique d'algorithme d'optimisation et la stratégie d'exécution d'algorithme dans la base de données ou lorsque le premier résultat de calcul optimisé est supérieur au deuxième résultat de calcul optimisé dans les informations de cas de correspondance.

6. Dispositif d'optimisation du modèle d'architecture de dispositif de commande SDON selon la revendication 4, dans lequel le module d'optimisation (40) comprend en outre :
une unité d'attribution de ressources configurée pour attribuer des ressources de réseau programmable à l'objet de ressource à optimiser selon le premier résultat de calcul optimisé, et pour mettre à jour les informations de ressource de réseau virtuel programmable par le biais d'un réseau selon les ressources de réseau programmable attribuées.

7. Système d'optimisation d'un modèle d'architecture de dispositif de commande SDON, comprenant une mémoire, un processeur et au moins une application stockée dans la mémoire et configurée pour être exécutée par le processeur, dans lequel l'au moins une application est configurée pour réaliser le procédé d'optimisation du modèle d'architecture de dispositif de commande SDON selon l'une quelconque des revendications 1 - 3.

8. Support de stockage lisible par ordinateur stockant un programme informatique dans celui-ci, dans lequel le programme, lorsqu'il est exécuté par un processeur, met en oeuvre le procédé d'optimisation du modèle d'architecture de dispositif de commande SDON selon l'une quelconque des revendications 1 - 3.
